# EUROPEAN PATENT SPECIFICATION

(11) **EP 3 097 321 B1**
(45) Date of publication and mention of the grant of the patent: **24.07.2019**
(21) Application number: 15740104.3
(22) Date of filing: 21.01.2015
(51) Int. Cl.: F16F 15/10, F16F 15/14

(54) **ROTARY VIBRATION ABSORBER**
ROTIERENDER SCHWINGUNGSDÄMPFER
AMORTISSEUR DE VIBRATIONS ROTATIF

(30) Priority: 25.01.2014 DE 102014001043
(43) Date of publication of application: 30.11.2016
(73) Proprietor: BorgWarner Inc., Auburn Hills, MI 48326 (US)
(72) Inventor: SCHNEIDER, Florian, 68766 Hockenheim (DE); SAXENA, Viren, 68199 Mannheim (DE); HAUCK, Hans Juergen, 74523 Schwaebisch Hall (DE); HEINRICH, Johannes Helmut, 61381 Friedrichsdorf (DE)
(74) Representative: Leckel, Ulf
(86) International application number: PCT/US2015/012178
(87) International publication number: WO 2015/112553

(56) References cited:
- WO-A1-00/49310
- DE-A1- 19 538 722
- DE-A1-102008 059 236
- DE-A1-102010 054 303
- JP-A- H0 544 772
- JP-A- 2005 299 742
- US-A- 5 366 210
- US-A1- 2004 075 202
- US-A1- 2010 210 365

## Description

The present invention relates to a rotary vibration absorber having a base part which is rotatable about an axis of rotation, having an inertial mass part which is arranged on the base part and which is rotatable relative to the base part counter to the restoring force of a restoring apparatus, and having an adjustment apparatus, the restoring apparatus being adjustable with variation, by means of the adjustment apparatus, of a restoring force characteristic curve of the restoring force acting on the inertial mass part.

DE 199 07 216 C1 and WO 00/49310 A1 disclose a rotary vibration absorber which has a base part which is rotatable about an axis of rotation and which is in the form of a carrier plate. On the base part there is arranged an inertial mass part which is rotatable relative to the base part counter to the restoring force of a restoring apparatus. The restoring apparatus has a bending spring which extends in a radial direction and which is fastened at one side to the base part and at the other side to the inertial mass part. Furthermore, the restoring apparatus has a sliding block which is guided in a radial direction on the base part and which serves for supporting the bending spring on the base part in the mutually opposite directions of rotation. In this case, the sliding block can, in the direction of extent of the bending spring, be displaced inward or outward relative to the bending spring in the radial direction in order to vary the effective length of the bending spring. Consequently, in this way, a restoring apparatus is created which can be adjusted so as to vary a restoring force characteristic curve of the restoring force acting on the inertial mass part. An increase in the rotational speed of the base part causes the sliding block of the restoring apparatus to move radially outward under centrifugal force action, thus leading to an increased gradient of the restoring force characteristic curve of the restoring force acting on the inertial mass part. In order, however, to displace the sliding block inward again in the radial direction with decreasing rotational speed of the base part, and thus reduce again the gradient of the restoring force characteristic curve of the restoring force acting on the inertial mass part, an adjustment apparatus is also provided. The adjustment apparatus is formed substantially by an actuation part which is arranged on the base part and which is in the form of a spring element and which interacts with the sliding block of the restoring apparatus such that said sliding block is displaced outward in the radial direction counter to the spring force of the actuation part and, with decreasing rotational speed, is moved inward again in the radial direction under the action of the spring force of the actuation part.

The known rotational vibration absorber thus has the disadvantage that the adjustment apparatus for adjusting the restoring apparatus must in any case have an actuation part in the form of a restoring spring in order to retract the sliding block of the restoring apparatus inward again in the radial direction when the rotational speed of the base part decreases. An actuation part of said type in the form of a spring element however necessitates a complex construction, which takes up a large amount of structural space, of the rotary vibration absorber.

It is therefore an object of the present invention to provide a rotary vibration absorber of the generic type which has a simplified and structural space-saving construction.

Said object is achieved by means of the features specified in patent claim 1. The subclaims relate to advantageous embodiments of the invention.

The rotary vibration absorber according to the invention has a base part which is rotatable about an axis of rotation and which can be fastened rotationally conjointly for example to an output side of a driven shaft, wherein, in this case, the base part is preferably, in the region of the axis of rotation, connected rotationally conjointly to the output side of a driven shaft. The base part may for example be formed by a base or carrier plate extending substantially in a radial direction. The rotary vibration absorber furthermore has an inertial mass part which is arranged on the base part. In this case, the inertial mass part may be arranged either indirectly or directly on the base part, for example indirectly via the restoring apparatus described below. Accordingly, the rotary vibration absorber also has a restoring apparatus, wherein the inertial mass part can be rotated relative to the base part counter to the restoring force of said restoring apparatus. The restoring apparatus may for example comprise a spring device with one or more spring elements which may serve for indirectly or directly generating the restoring force acting on the inertial mass part. The restoring apparatus can be adjusted with variation of a restoring force characteristic curve of the restoring force acting on the inertial mass part. Accordingly, it is for example possible for the gradient of the restoring force characteristic curve of the restoring force acting on the inertial mass part to be increased or reduced through adjustment of the restoring apparatus, such that the stiffness of the restoring apparatus is increased or reduced accordingly. An adjustment apparatus is provided for the adjustment of the restoring apparatus. The adjustment apparatus has an actuation part which is arranged on the base part and which, under the action of an inertial force acting on the actuation part, is rotatable relative to the base part about the axis of rotation with adjustment of the restoring apparatus. Correspondingly, the actuation part of the adjustment apparatus is thus in the form of a second inertial mass part. The actuation part of the adjustment apparatus thus utilizes the fact that the base part, despite the inertial mass part which is arranged thereon and which is rotatable relative to the base part counter to the restoring force of the restoring apparatus, is still subject to - albeit small - rotational vibrations. Owing to the inertia of the actuation part of the adjustment apparatus, the actuation part can, in the case of a base part which is subject to rotational vibrations, be rotated relative to the base part about the axis of rotation alternately both in one direction of rotation and in the opposite direction of rotation in order to effect an adjustment of the restoring apparatus and thus a variation of the restoring force characteristic curve of the restoring force acting on the inertial mass part. Accordingly, by rotation of the actuation part in one direction of rotation relative to the base part about the axis of rotation, the restoring force characteristic curve can be varied in one manner, for example in the sense of a reduction of the gradient thereof, whereas, by rotation of the actuation part in the opposite direction of rotation relative to the base part about the axis of rotation, the restoring force characteristic curve can be varied in the opposite manner, for example in the sense of an increase of the gradient of the restoring force characteristic curve. Consequently, an adjustment of the restoring apparatus by means of the actuation part of the adjustment apparatus is possible in both directions under the action of inertia, whereas the adjustment of the sliding block known from DE 199 07 216 C1 takes place under the action of inertia or centrifugal force only in one adjustment direction, and takes place in the other actuation direction under the action of the spring force of the actuation part in the form of a spring element, wherein the actuation part, in the form of a spring element, of the rotary vibration absorber known from DE 199 07 216 C1 is itself not rotatable relative to the base part about the axis of rotation under the action of inertia.

In a preferred embodiment of the rotary vibration absorber according to the invention, the actuation part can be locked so as to prevent a rotation of the actuation part relative to the base part about the axis of rotation. In other words, the actuation part that is locked in this way cannot be rotated relative to the base part about the axis of rotation either in one direction of rotation or in the opposite direction of rotation. This is advantageous in that, by means of the locking of the actuation part independently of changes in rotational speed of the base part, a uniform restoring force characteristic curve of the restoring force acting on the inertial mass part can be realized. Consequently, it is possible, for example in a predetermined rotational speed range of the base part, to realize a uniform restoring force characteristic curve by locking the actuation part.

In a particularly preferred embodiment of the rotary vibration absorber according to the invention, the actuation part can be fixed such that the actuation part is rotatable relative to the base part about the axis of rotation in one direction of rotation and is not rotatable relative to the base part about the axis of rotation in an opposite direction of rotation. If, in the case of such fixing of the actuation part, the base part is subject to - albeit small - rotational vibrations, the actuation part is, owing to the inertial force acting on the actuation part, rotated in stepped fashion in one direction of rotation relative to the base part about the axis of rotation in temporally separated phases, wherein the fact that the fixed actuation part is not rotatable relative to the base part about the axis of rotation in the opposite direction of rotation has the effect that, after every rotation in one direction of rotation, the actuation part is not rotated back again in the opposite direction of rotation relative to the base part about the axis of rotation. Consequently, in this embodiment, by virtue of the actuation part being fixed, the actuation part is rotated in stepped fashion relative to the base part about the axis of rotation in only one of the two directions of rotation, such that a targeted variation of the restoring force characteristic curve of the restoring force acting on the inertial mass part is realized, for example either an increase of the gradient of the restoring force characteristic curve or a reduction of the gradient of the restoring force characteristic curve.

In an advantageous embodiment of the rotary vibration absorber according to the invention, the actuation part is rotatable relative to the base part about the axis of rotation, with adjustment of the restoring apparatus, between two end positions. In other words, the actuation part is assigned a maximum rotational angle range by virtue of the two end positions being fixed, wherein, in the respective end position, the actuation part can preferably be supported indirectly or directly on the base part in one direction of rotation or in the opposite direction of rotation.

In a further advantageous embodiment of the rotary vibration absorber according to the invention, the actuation part is lockable in a position between the two end positions such that a rotation of the actuation part relative to the base part is prevented, in order to prevent a rotation of the actuation part in one direction of rotation and also in the opposite direction of rotation relative to the base part and thus in the direction of one end position and of the other end position.

According to a particularly advantageous embodiment of the rotary vibration absorber according to the invention, the actuation part is fixable in a position between the above-mentioned end positions such that the actuation part is rotatable relative to the base part about the axis of rotation in one direction of rotation and is not rotatable relative to the base part about the axis of rotation in an opposite direction of rotation. Consequently, to achieve the stated effect, fixing of the actuation part is also possible in a position that can be assumed between the end positions of the actuation part.

In a further particularly preferred embodiment of the rotary vibration absorber according to the invention, the actuation part is hydraulically lockable and/or fixable in the above-described manner. The hydraulic locking and/or fixing capability of the actuation part has the advantage that the rotary vibration absorber can have a simple and compact construction. Moreover, for the locking and/or fixing of the actuation part, it is possible to utilize a hydraulic arrangement, provided in any case, of other components arranged together with the rotary vibration absorber in a drivetrain, in particular the hydraulic medium supply thereof, which permits simple integration into a drivetrain with already existing hydraulic components.

In a further preferred embodiment of the rotary vibration absorber according to the invention, in which the actuation part is hydraulically lockable and/or fixable, the adjustment apparatus has a hydraulic device with a cylinder and with a piston which is guided in the cylinder, of which the piston is arranged on the actuation part or the base part and the cylinder is arranged on the base part or the actuation part. In this embodiment, it is thus for example possible for the piston to be arranged on the actuation part, while the cylinder is arranged on the base part. Conversely, it is likewise possible for the piston to be arranged on the base part, while the cylinder is provided on the actuation part. For the purposes of easier supply and discharge of hydraulic medium, however, it is preferable for the piston to be arranged on the actuation part, while the cylinder is arranged on the base part. Here, the expressions "cylinder" and "piston" are to be understood in the broadest sense and do not constitute a restriction with regard to their geometric design; rather, it is crucial that the piston and cylinder delimit a hydraulic functional space, such as for example the first and/or second chamber described in more detail further below, and, in interaction, have the function of a hydraulic piston-cylinder arrangement.

In a further advantageous embodiment of the rotary vibration absorber according to the invention, the above-mentioned cylinder of the hydraulic device is in the form of a double-acting cylinder. The expression "double-acting cylinder" is to be understood here in the broadest sense. Accordingly, the double-acting cylinder may also be formed by two single-acting cylinders which, owing to their common interaction with the piston, have the function of a double-acting cylinder.

In a further advantageous embodiment of the rotary vibration absorber according to the invention, the double-acting cylinder has a first chamber and a second chamber.

In a further preferred embodiment of the rotary vibration absorber according to the invention, the hydraulic device can, for example by means of a switchable directional valve, possibly in combination with one or two check valves or non-return valves, be moved into a locked state, in which the inflow and outflow of hydraulic medium into and out of the first and second chambers is prevented. Consequently, it is possible in this way to realize the locking in a simple manner, as already described above, of the actuation part so as to prevent a rotation of the actuation part relative to the base part about the axis of rotation.

In a further preferred embodiment of the rotary vibration absorber according to the invention, the hydraulic device can, for example by means of a switchable directional valve, possibly in conjunction with one or two check or non-return valves, be moved into a first actuation state in which hydraulic medium can be displaced out of the first chamber but not out of the second chamber by the actuation part which is subjected to inertial force. In this way, the above-described fixing of the actuation part can be realized in a particularly simple manner such that the actuation part is rotatable relative to the base part about the axis of rotation in a first direction of rotation and is not rotatable relative to the base part about the axis of rotation in an opposite second direction of rotation.

In a further preferred embodiment of the rotary vibration absorber according to the invention, the hydraulic device can, for example by means of a directional valve, possibly in conjunction with one or two check or non-return valves, be moved into a second actuation state in which hydraulic medium can be displaced out of the second chamber but not out of the first chamber by the actuation part which is subjected to inertial force. Consequently, it is possible in this way for the actuation part to be particularly easily fixed in the above-described manner such that the actuation part is rotatable relative to the base part about the axis of rotation in the second direction of rotation and is not rotatable relative to the base part about the axis of rotation in the opposite, first direction of rotation.

In a further particularly advantageous embodiment of the rotary vibration absorber according to the invention, it is possible in the above-mentioned first and/or second actuation state for hydraulic medium to be introduced into the second and/or first chamber. In the case of this embodiment, it is preferable if the hydraulic medium that can be introduced into the second and/or first chamber is formed by the hydraulic medium displaced from the first and/or second chamber. Consequently, in this embodiment, a substantially closed region for the hydraulic medium is realized between the first and second chambers, such that basically no additional hydraulic medium or no additional hydraulic pressure has to be actively added from an external source. In this way, the construction of the hydraulic device is greatly simplified, and said hydraulic device can be arranged in a space-saving manner on the rotary vibration absorber. Nevertheless, in this embodiment, it is preferable for the substantially closed region of the hydraulic medium for the first and second chambers to additionally be charged with the hydraulic medium or a hydraulic pressure or system pressure from an external source in order to compensate for any leakage losses, for example in the region of piston and cylinder. Furthermore, however, there is no need for a hydraulic medium or hydraulic pressure to be supplied from an external source in order to effect a rotation of the actuation part relative to the base part about the axis of rotation. This can also be referred to as a passive actuation of the actuation part.

As already indicated above, it would be possible for the restoring apparatus to have a device for generating an actuating force, for example a spring device, wherein the actuating force of said device could act directly on the inertial mass part such that the actuating force generated likewise constitutes the restoring force acting on the inertial mass part. In a further particularly advantageous embodiment of the rotary vibration absorber according to the invention, however, the restoring apparatus has at least one pivotable lever element by means of which an actuating force can be transmitted to the inertial mass part so as to generate the restoring force acting on the inertial mass part. This firstly has the advantage that the device of the restoring apparatus which generates the actuating force, for example a spring device, does not need to act directly on the inertial mass part, and can instead be arranged at some other location on the base part of the rotary vibration absorber, permitting a space-saving and more flexible arrangement of the device for generating the actuating force. Secondly, owing to the lever element, which is preferably in the form of a rigid lever element, it is possible for a lever ratio to be set, based on which the restoring force acting on the inertial mass part is greater or smaller than the actuating force generated by a corresponding device of the restoring apparatus. It is accordingly possible for the stiffness of the restoring apparatus to be increased, for example in targeted fashion, by way of the lever ratio of the lever element, without the need for a particularly rigid device for generating the actuating force.

In a further particularly preferred embodiment of the rotary vibration absorber according to the invention, the lever element is pivotable about an articulation point which interacts - indirectly or directly - with the actuation part such that, by rotation of the actuation part relative to the base part about the axis of rotation, said articulation point is adjustable and/or displaceable, and consequently variable, with variation of the lever ratio of the lever element. It is consequently possible in this embodiment, by adjusting and/or displacing the articulation point, for the restoring apparatus to be adjusted in a particularly simple manner, with variation of the restoring force characteristic curve of the restoring force acting on the inertial mass part. It is thus made possible for the stiffness of the restoring apparatus to be varied in a simple manner by adjusting and/or displacing the articulation point of the lever element.

In a further preferred embodiment of the rotary vibration absorber according to the invention, on the base part, there is provided a protruding projection, which is displaceable along a displacement travel, for forming the articulation point. It is accordingly possible for the protruding projection to be arranged for example so as to be displaceable along a guide on the base part. The displacement travel, possibly the guide on the base part, may in principle have any desired profile. It is however preferable for the displacement travel, possibly the guide, to extend in a radial direction and/or rectilinearly. Furthermore, in the case of this embodiment, it is preferable if the actuation part has a positive guide which extends obliquely with respect to the displacement travel and which interacts with the protruding projection. The positive guide in this case may also have a profile which deviates from a straight line. It is however likewise possible to provide a rectilinearly extending positive guide in order to realize predetermined, invariant proportionality between the rotational path of the actuation part relative to the base part and the displacement path of the protruding projection relative to the base part.

In a further preferred embodiment of the rotary vibration absorber according to the invention, the inertial mass part is rotatable relative to the base part while maintaining a predetermined radial spacing to the axis of rotation. Consequently, in this embodiment, it is possible for vibrations or movements of the inertial mass part in the radial direction to be prevented, such that compensation of such vibrations or movements of the inertial mass part in the radial direction can be disregarded in the design of the rotary vibration absorber, which leads to a simplified and space-saving construction of the rotary vibration absorber.

In a further advantageous embodiment of the rotary vibration absorber according to the invention, the lever element has a first lever section between an actuating force action point and the articulation point and has a second lever section between the articulation point and a restoring force action point, wherein the length of the first and second lever sections can be varied by rotation of the inertial mass part relative to the base part, with the lever ratio being substantially maintained. The variation, that is to say elongation or shortening, of the first and second lever sections may in this case be realized in any desired manner; for example, the stated lever sections may for example be of telescopic form. Regardless of the respective design variant, the elongation or shortening of the lever sections makes it possible for the inertial mass part to be rotated relative to the base part while maintaining a predetermined radial spacing to the axis of rotation of the base part, as has already been indicated above. This embodiment also encompasses design variants in which, owing to the design configuration, in particular in the region of articulation point, actuating force action point and/or restoring force action point, rotation of the inertial mass part relative to the base part can result in slight changes in the lever ratio. Such a slight change may arise for example owing to the fact that, during the rotation of the inertial mass part relative to the base part, the actuating force action point is moved along a straight line, possibly a straight line parallel to a radial line, whereas the restoring force action point is moved along a circular path around the axis of rotation. In this case, and in other cases, the design should however preferably be configured such that the lever ratio is varied by at most 5%, particularly preferably by at most 3% or at most 1%, as a result of rotation of the inertial mass part relative to the base part.

In a further preferred embodiment of the rotary vibration absorber according to the invention, two of the abovementioned points, that is to say two points out of articulation point, actuating force action point and restoring force action point, are displaceable relative to the lever element with variation of the length of the lever sections. Here, it is preferable if the articulation point on the one hand and the actuating force action point or the restoring force action point on the other hand are displaceable relative to the lever element with variation of the length of the lever sections, whereas the remaining point is particularly preferably arranged immovably on the lever element.

In a further advantageous embodiment of the rotary vibration absorber according to the invention, the restoring apparatus has - as already indicated above - a spring device for generating the actuating force, which is consequently a spring force.

In a further advantageous embodiment of the rotary vibration absorber according to the invention, the spring device for generating the actuating force has a first spring element and a second spring element which act on the lever element oppositely to one another. In this embodiment, it is preferable for the two spring elements that act on the lever element oppositely to one another to be in the form of compression springs, possibly helical compression springs.

According to a further preferred embodiment of the rotary vibration absorber according to the invention, the lever element is arranged in an initial state under preload of the first and second spring elements of the spring device. This has the advantage that a particularly high stiffness of the spring device is attained in a rotational angle range of the lever element around the initial state. In this embodiment, it is moreover preferable for the first and second spring elements to be preloaded such that they both exert a respective actuating force on the lever element over the maximum rotational angle range of the inertial mass part relative to the base part. In this way, increased stiffness of the spring device is ensured over the maximum rotational angle range of the inertial mass part.

In a further preferred embodiment of the rotary vibration absorber according to the invention, the first spring element and the second spring element each have a longitudinal axis which is offset radially outward in relation to the axis of rotation of the base part. It is ensured in this way that the base part of the rotary vibration absorber can be securely rotationally conjointly connected, in the region of the axis of rotation, to an output side of a component, for example the output side of a flywheel mass, the output side of a drive unit or the output side of a torsional vibration damper, without the spring elements of the spring device posing a hindrance or restriction. In this context, it has proven to be advantageous for the spring elements, and not only the longitudinal axes thereof, to be spaced apart from the axis of rotation of the base part in a radial direction .

In a further advantageous embodiment of the rotary vibration absorber according to the invention, the longitudinal axes of the first and second spring elements extend along a common straight line and/or parallel to a radial line of the rotary vibration absorber.

In a further advantageous embodiment of the rotary vibration absorber according to the invention, the actuation part and/or the inertial mass part and/is of annular form. In this way, only one actuation part and/or inertial mass part needs to be provided. Accordingly, for example, an actuation part of annular form is particularly suitable for the adjustment of two or more restoring apparatuses simultaneously. Moreover, by means of the annular form of the actuation part and/or of the inertial mass part, it is possible owing to the annular design for imbalances to be avoided, and targeted balancing made superfluous. In the case of this embodiment, it is moreover preferable for the actuation part to be in the form of an annular disk form in order to achieve the advantages mentioned above and likewise ensure a short axial structural length of the rotary vibration absorber.

In a further advantageous embodiment of the rotary vibration absorber according to the invention, the actuation part is in the form of a rigid actuation part and/or the lever element is in the form of a rigid lever element. While, in the case of a rigid actuation part, precise and targeted adjustment is ensured without influence from deformations of the actuation part, a lever element of rigid form ensures targeted and precise transmission of the actuating force, or conversion of the actuating force into the restoring force acting on the inertial mass part, without influence from deformations of the lever element.

The invention will be explained in more detail below on the basis of an exemplary embodiment and with reference to the appended drawings. In the drawings:
Figure 1 shows a front view of an embodiment of the rotary vibration absorber according to the invention, with the lever element in an initial state,
Figure 2 is a partial illustration of the rotary vibration absorber from Figure 1 with the schematically indicated hydraulic device in a locked state,
Figure 3 shows the rotary vibration absorber from Figure 2 with the hydraulic device in a first actuation state,
Figure 4 shows the rotary vibration absorber from Figures 2 and 3 with the hydraulic device in a second actuation state, and
Figure 5 shows the rotary vibration absorber from Figures 2 to 4 with the lever element pivoted out of the initial state.

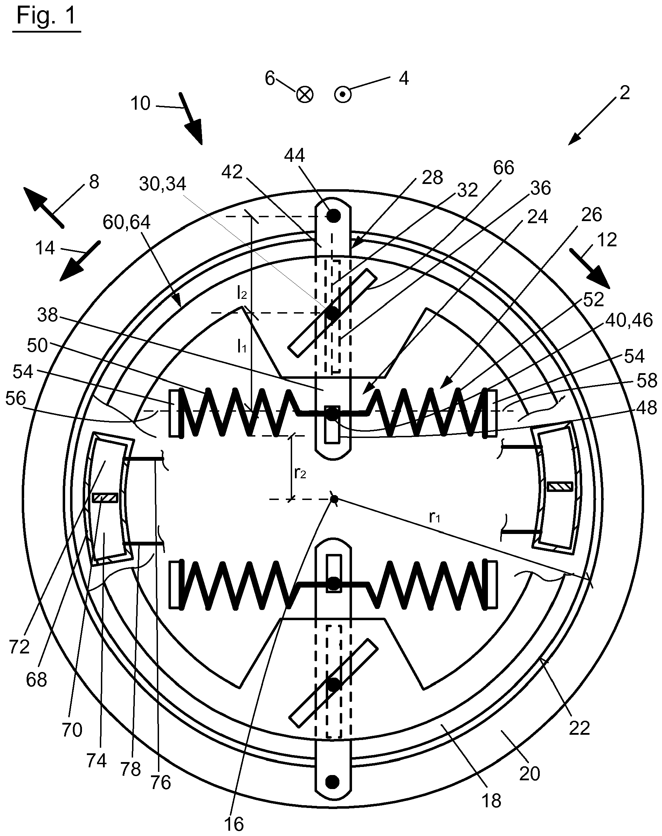

Figures 1 to 5 show an embodiment of the rotary vibration absorber 2 according to the invention. In the figures, the mutually opposite axial directions 4, 6, the mutually opposite radial directions 8, 10 and the mutually opposite directions of rotation 12, 14, which may also be referred to as mutually opposite circumferential directions, of the rotary vibration absorber 2 are indicated by way of corresponding arrows, wherein the rotary vibration absorber 2 has an axis of rotation 16 extending in the axial directions 4, 6. Below, the two directions of rotation 12, 14 are also referred to as first direction of rotation 12 and second direction of rotation 14.

The rotary vibration absorber 2 has a base part 18 which is rotatable in the directions of rotation 12, 14 about the axis of rotation 16. The base part 18 may for example be of plate-shaped form, wherein the base part 18 preferably extends in the plane spanned by the radial directions 8, 10, in this case the plane of the drawing. The base part 18 may, in the region of the axis of rotation 16, be connected to the output side of a component within a drivetrain or form the output side of said component, wherein a component of said type is preferably an internal combustion engine, a flywheel mass or a torsional vibration damper.

An inertial mass part 20 is arranged on the base part 18. The inertial mass part 20 is of annular form and is arranged on the base part 18 at the outside in the radial direction 8, wherein the inertial mass part 20 need not imperatively be supported on the outer side 22, which is situated furthest toward the outside in the radial direction 8, of the base part 18. In the embodiment illustrated, the inertial mass part 20 is rather spaced apart from said outer side 22 in the radial direction 8, 10, such that frictional contact does not occur here between the inertial mass part 20 and the outer side 22 of the base part 18. It would however alternatively also be possible for the inertial mass part 20 to be supported indirectly or directly on the outer side 22. The inertial mass part 20 can be rotated relative to the base part 18 about the axis of rotation 16 counter to the restoring force of a restoring apparatus 24. Accordingly, the inertial mass part 20 can be rotated relative to the base part 18 about the axis of rotation 16 both in the first direction of rotation 12 and in the opposite, second direction of rotation 14. Here, the inertial mass part 20 can be rotated relative to the base part 18 while maintaining a predetermined radial spacing r₁ to the axis of rotation 16.

As can be seen from Figure 1, the rotary vibration absorber 2 has two restoring apparatuses 24 which are arranged opposite one another on the rotary vibration absorber 2 and which in this case are of substantially structurally identical form, such that the restoring apparatuses 24 will be described below with reference to only one of the restoring apparatuses 24, wherein the description likewise applies to the other restoring apparatus 24. The restoring apparatus 24 has a spring device 26 for generating an actuation force and has a pivotable lever element 28 via which the actuation force of the spring device 26 can be transmitted to the inertial mass part 20 so as to generate the restoring force acting on the inertial mass part 20.

The lever element 28 is pivotable relative to the base part 18 about an articulation point 30. Consequently, the lever element 28 can be pivoted relative to the base part 18 about a pivot axis extending in the axial directions 4, 6. For this purpose, on the base part 18, a protruding projection 34 which is displaceable along a displacement travel 32 extending rectilinearly in a radial direction 8, 10 is provided for forming the articulation point 30. To form the displacement travel 32, a corresponding guide for the protruding projection 34 may for example be provided on the base part 18. The protruding projection 34 extends in the axial direction 4, 6 into a guide 36 in the lever element 28, which guide extends in the direction of extent of the lever element 28 and is in this case in the form of an elongate cutout.

The lever element 28 has a first lever section 38 between an actuation force action point 40, at which the actuation force of the spring device 26 is transmitted to the lever element 28, and the articulation point 30. Furthermore, the lever element 28 has a second lever section 42 which extends between the articulation point 30 and a restoring force action point 44, wherein the restoring force resulting from the actuation force of the spring device 26 acts on the inertial mass part 20 at the restoring force action point 44. The first lever section 38 has a length l₁, whereas the second lever section 42 has a length l₂. The lever element 28 consequently has a lever ratio l₁ / l₂, meaning l₁ divided by l₂.

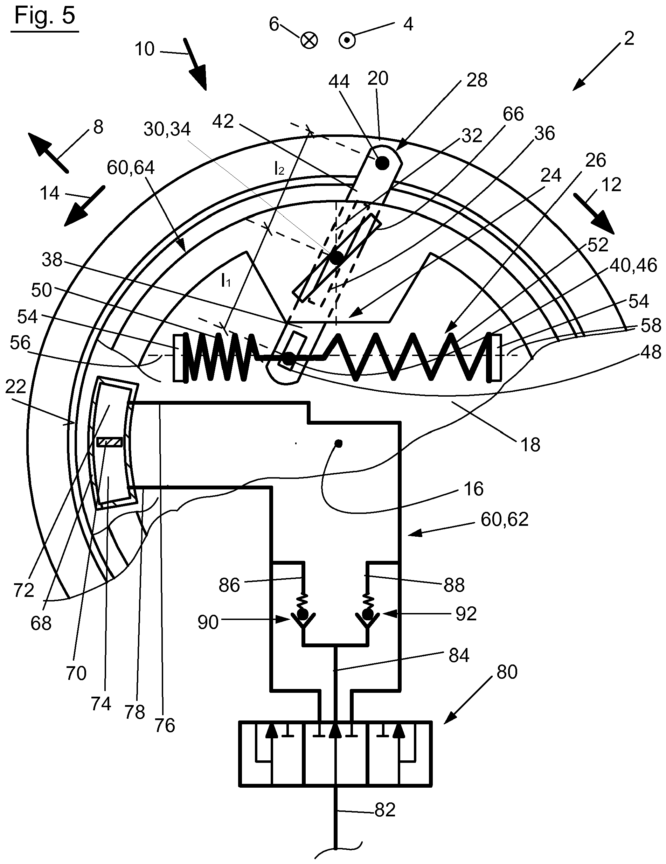

The two lengths l₁ and l₂ can be varied, and consequently increased or reduced, by rotation of the inertial mass part 20 relative to the base part 18, as indicated in Figure 5, with the lever ratio l₁ / l₂ being substantially maintained. For this purpose, in the embodiment illustrated, it is firstly the case that the articulation point 30 is displaceable relative to the lever element 28, as has already been described above with reference to the protruding projection 34 and the guide 36, and secondly, the actuating force action point 40 is displaceable relative to the lever element 28. The latter is realized for example in that the projection 46 which forms the actuation force action point 40 is arranged in a guide 48 within the lever element 28, wherein the guide 48, like the guide 36, extends in the direction of extent of the lever element 28 and, in this case, is for example in the form of an elongate cutout in the lever element 28. By contrast, the restoring force action point 44 is arranged fixedly on the lever element 28, wherein the lever element 28 is, at the restoring force action point 44, pivotable relative to the inertial mass part 20 about a pivot axis extending in the axial directions 4, 6.

The spring device 26 of the restoring apparatus 24 has a first spring element 50 and a second spring element 52. The two spring elements 50, 52 are in the form of compression springs, in this case helical compression springs, and act oppositely to one another on the lever element 28. Accordingly, the two spring elements 50, 52 are each supported at one side on the base part 18, in this case on a projection 54, and at the other side on the actuation force action point 40 or on the projection 46, wherein the projection 46 is preferably arranged on a displaceable carriage (not illustrated) on which the spring elements 50, 52 are supported, such that it can also be said that the support on the restoring force action point 44 or projection 46 is indirect.

The lever element 28 is arranged in the initial state shown in Figures 1 to 4 under preload of the first and second spring elements 50, 52. In this case, the first and second spring elements 50, 52 are preloaded such that the two spring elements 50, 52 exert a respective actuating force on the lever element 28 over the maximum rotational angle range of the inertial mass part 20 relative to the base part 18. In other words, the preload of the spring elements 50, 52 is selected such that said preload is at least partially maintained regardless of the degree of rotation of the inertial mass part 20 relative to the base part 18.

The first spring element 50 and the second spring element 52 each have a longitudinal axis 56, 58, wherein the longitudinal axes 56, 58 are offset outward in the radial direction 8 in relation to the axis of rotation 16 of the rotary vibration absorber 2. In this case, the two longitudinal axes 56, 58 extend along a common straight line, such that it can also be said that the longitudinal axes 56, 58 are arranged in alignment with one another. The two longitudinal axes 56, 58 also extend parallel to a radial line of the rotary vibration absorber 2. Moreover, not only the longitudinal axes 56, 58 of the spring elements 50, 52 are offset outward in the radial direction 8 in relation to the axis of rotation 16; rather, the spring elements 50, 52 themselves are also arranged spaced apart from the axis of rotation 16 in the radial direction 8, as indicated by the radial spacing r₂. In this way, the base part 18 can, in the region of the axis of rotation 16, be connected rotationally conjointly to an output side of a component of a drivetrain in a motor vehicle, without a connection of said type being impeded or even prevented by the spring device 26.

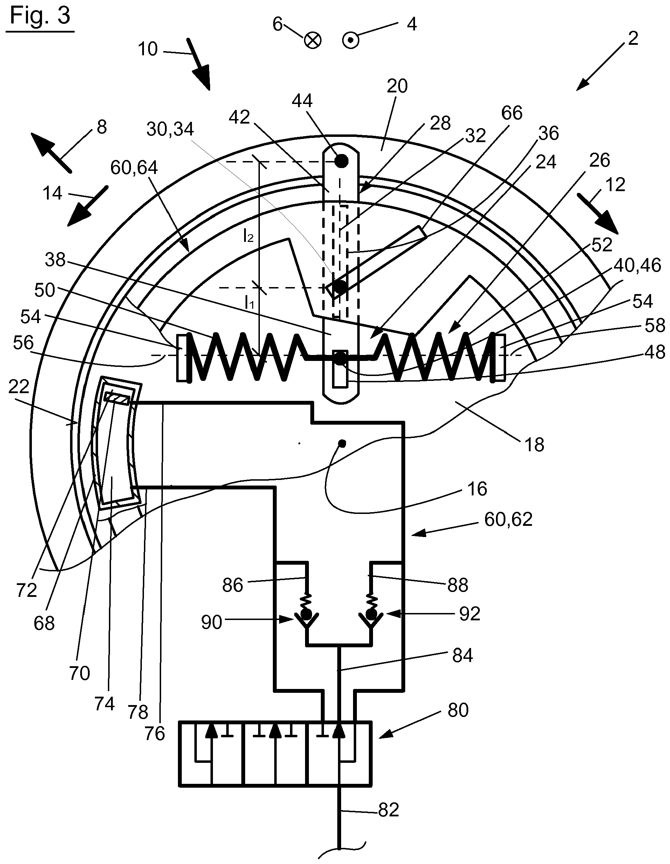

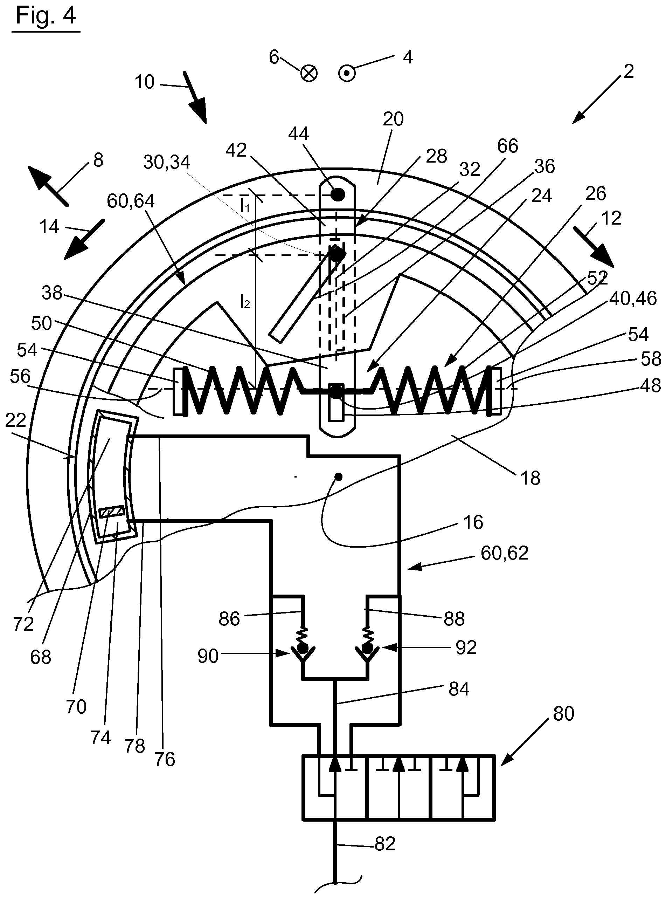

The lever element 28 is in the form of a substantially rigid lever element 28. The above-mentioned lever ratio l₁ / l₂ is however variable. Consequently a restoring apparatus 24 is created which can be adjusted so as to vary a restoring force characteristic curve of the restoring force acting on the inertial mass part 20 at the restoring force action point 44. In the embodiment illustrated, this may be effected by virtue of the articulation point 30 or the protruding projection 34 which forms the articulation point 30 being displaced relative to the base part 18 along the displacement travel 32, as indicated in Figures 3 and 4. The adjustment of the restoring apparatus 24 with variation of the restoring force characteristic curve of the restoring force acting on the inertial mass part 20, or the displacement of the articulation point 30 or of the protruding projection 34 along the displacement travel 32 relative to the base part 18, may be effected by means of an adjustment apparatus 60 of the rotary vibration absorber 2, as will be explained in more detail below.

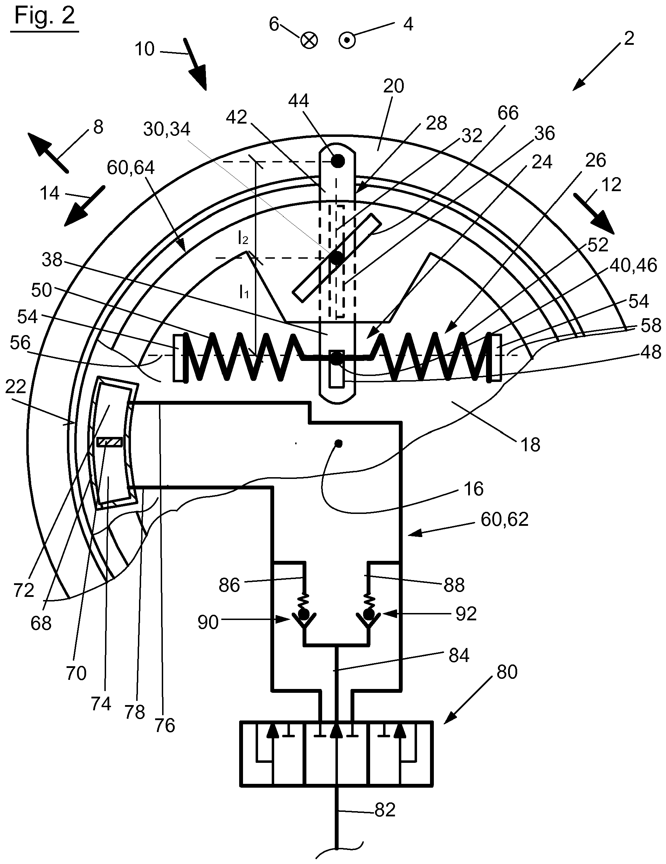

As can be seen from Figure 2, the adjustment apparatus 60 is composed substantially of a hydraulic device 62 and an actuation part 64, wherein the actuation part 64 of the adjustment apparatus 60 interacts with the two restoring apparatuses 24 shown in Figure 1. Consequently, one adjustment apparatus 60 or one actuation part 64 is provided for two or more restoring apparatuses 24. The actuation part 64 is annular, and is in the form of a substantially rigid actuation part 64. In this case, the actuation part 64 is at least partially of annular disk-shaped form in order to ensure a small axial structural length of the rotary vibration absorber 2. The actuation part 64 is arranged on the base part 18 and is rotatable relative to the base part 18 about the axis of rotation 16 - at least within a maximum rotational angle range. Consequently, the actuation part 64 analogously also forms an inertial mass part which, owing to the rotational vibrations of the base part 18, can be rotated relative to the base part 18 about the axis of rotation 16 both in the first direction of rotation 12 and in the second direction of rotation 14, which can be attributed to the inertial forces acting on the actuation part 64 during rotational vibrations of the base part 18.

The actuation part 64 interacts with the restoring apparatus 24, or with the articulation point 30 or the projection 34 which forms the articulation point 30, such that the restoring apparatus 24 is adjusted with variation of the restoring force characteristic curve of the restoring force acting on the inertial mass part 20. More precisely, the actuation part 64 interacts with the articulation point 30, or with the protruding projection 34 which forms the articulation point 30, such that said articulation point or protruding projection is adjustable and/or displaceable, and consequently variable, by rotation of the actuation part 64 relative to the base part 18 about the axis of rotation 16 with variation of the lever ratio l₁ / l₂ of the lever element 28. For this purpose, the actuation part 64 has a positive guide 66 which extends obliquely with respect to the displacement travel 32 and which crosses the displacement travel 32 and which interacts with the protruding projection 34 which forms the articulation point 30. More precisely, in the embodiment illustrated, the protruding projection 34 extends in the axial direction 4, 6 into the positive guide 66, which in this case is in turn in the form of an elongate cutout in the actuation part 64. The positive guide 66 is of rectilinear form, wherein it could also be advantageous to provide a positive guide 66 with a profile which deviates from a straight line.

It can thus firstly be stated that the actuation part 64 can be rotated relative to the base part 18 about the axis of rotation 16 both in the first direction of rotation 12 and in the second direction of rotation 14 under the action of inertia owing to rotational vibrations of the base part 18, such that the restoring apparatus 24 or the articulation point 30 is adjustable, possibly displaceable, both in one direction and in the opposite direction by means of the same actuation part 64. The actuation part 64 can furthermore be releasably locked so as to prevent a rotation of the actuation part 64 relative to the base part 18 about the axis of rotation 16, for example in order to realize a uniform restoring force characteristic curve of the restoring force acting on the inertial mass part 20 in one operating state, for example in a predetermined rotational speed range. In this case, the actuation part 64 is lockable, so as to prevent a rotation of the actuation part 64 relative to the base part 18, in particular in a position between two end positions of the actuation part 64. In this case, the end positions designate positions assumed by the actuation part 64 when the actuation part 64 is rotated relative to the base part 18 about the axis of rotation 16 to a maximum extent in the first direction of rotation 12 or to a maximum extent in the second direction of rotation 14, wherein said positions may be structurally predefined, for example by means of stops.

When the actuation part 64 is not locked, rotational vibrations of the base part 18 would cause the actuation part 64 to be acted on with an inertial force which generates a rotation of the actuation part 64 relative to the base part 18 about the axis of rotation 16 alternately in the first direction of rotation 12 and in the second direction of rotation 14, such that the restoring apparatus 24 would also be adjusted alternately in one direction of action and in the opposite direction of action. Consequently, the restoring apparatus 24 would not be adjusted in targeted fashion in only one direction of action. To permit this, not only can the actuation part 64 be locked in the manner described above, but moreover, the actuation part 64 can also be fixed in a position between the above-described end positions by virtue of the actuation part 64 being rotatable relative to the base part 18 about the axis of rotation 16 in one direction of rotation 12 or 14 and not being rotatable relative to the base part 18 about the axis of rotation 16 in the opposite direction of rotation 14 or 12. In the embodiment illustrated, both the locking and also the fixing of the actuation part 64 are realized hydraulically, specifically by means of the hydraulic device 62, which will be described in more detail below with reference to Figures 2 to 4.

The hydraulic device 62 has a piston-cylinder arrangement, with two piston-cylinder arrangements being indicated in the embodiment illustrated. It is basically the case that only one piston-cylinder arrangement is necessary, but to avoid imbalances, two piston-cylinder arrangements are provided opposite one another on the rotary vibration absorber 2. The individual piston-cylinder arrangement has a cylinder 68 and a piston 70 which is guided in the cylinder 68. The cylinder 68 is in this case arranged on the base part 18, whereas the piston 70 is arranged on the actuation part 64, wherein a reversed arrangement may basically also be possible. As can be seen from the figures, the cylinder 68 is in the form of a double-acting cylinder 68, such that the latter has a first chamber 72 and a second chamber 74 for receiving the hydraulic medium, for example a hydraulic oil.

The hydraulic device 62 furthermore has two lines 76, 78, of which the line 76 issues into the first chamber 72, whereas the line 78 issues into the second chamber 74. At their end remote from the cylinder 68, the lines 76, 78 lead to a control valve 80 which is in the form of a directional valve and which, on its side remote from the lines 76, 78, leads to a line 82 which is charged with the system pressure. Furthermore, on that side of the control valve 80 which is remote from the line 82, there is provided a line 84 which, dividing a line between the lines 76, 78 into a connecting line 86 and a connecting line 88, issues into said line. In the two connecting lines 86, 88 there is arranged a respective check valve 90, 92, wherein the check valves 90, 92, which in this case are in the form of non-return valves, more precisely spring-preloaded non-return valves, have mutually opposite directions of action. By means of the control valve 80, the hydraulic device 62 can be transferred into a locked state, a first actuation state and a second actuation state in order to effect the above-mentioned locking or fixing of the actuation part 64, wherein said states will be explained in more detail below.

Figure 2 shows the locked state of the hydraulic device 62. In the locked state, the hydraulic medium cannot flow out of the first chamber 72 via the line 76, as this is prevented both by the check valve 92 and by the control valve 80. Correspondingly, hydraulic medium also cannot flow out of the second chamber 74 via the line 78, as this is prevented by the check valve 90 and the control valve 80. Furthermore, in the locked state of the hydraulic device 62, the control valve 80 prevents a flow of hydraulic medium via the line 76 into the first chamber 72 and via the line 78 into the second chamber 74.

In the embodiment illustrated, the lines 82, 84, and thus the application of system pressure, serve merely for compensating for any - possibly leakage-induced - pressure losses in the first and second chambers 72, 74, as in the event of a pressure loss of said type, the pressure within the chambers 72, 74 can be compensated for by means of the system pressure, because in this case the check valves 92 and/or 90 can be opened by the system pressure in order to compensate for the pressure loss. If a system in which no pressure losses occur in the chambers 72, 74 is used as a basis, then it would be possible to dispense entirely with the provision of the lines 82, 84 or with the application of system pressure, as this would then have no influence on the functioning of the hydraulic device 62. In the locked state as per Figure 2, a rotation of the actuation part 64 relative to the base part 18 about the axis of rotation 16 is prevented, even when corresponding inertial forces act on the actuation part 64 in the direction of rotation 12 or 14 in the event of rotational vibrations of the base part 18.

Figure 3 shows a first actuation state of the hydraulic device 62. In the first actuation state, the actuation part 64 which is acted on with an inertial force owing to rotational vibrations of the base part 18, or the piston 70 arranged on the actuation part 64, can displace hydraulic medium out of the first chamber 72 but not out of the second chamber 74. The hydraulic medium that is displaced out of the first chamber 72 passes via the line 76, the control valve 80, the line 84, the connecting line 86 and the line 78 into the second chamber 74, such that in the first actuation state, hydraulic medium can be introduced into the second chamber 74. In this case, owing to the elevated pressure in the first chamber 72, the check valve 90 opens, such that the hydraulic medium, in this case the hydraulic medium displaced from the first chamber 72, can be introduced into the second chamber 74. A simultaneous displacement of hydraulic medium from the second chamber 74 owing to the actuation part 64 being acted on with inertial force is prevented in the first actuation state by the check valve 90 and the control valve 80. Correspondingly, owing to the rotational vibrations of the base part 18, the actuation part 64 is rotated in the direction of rotation 12 relative to the base part 18 about the axis of rotation 16 in stepped fashion under the action of inertia. In this case, the positive guide 66 in the actuation part 64 interacts with the articulation point 30, or with the protruding projection 34 which forms the articulation point 30, such that said articulation point or protruding projection is displaced inward in the radial direction 10 along the displacement travel 32. As a result, the lever ratio l₁ / l₂ of the lever element 28 is reduced by virtue of the first lever section 38 being shortened and the second lever section 42 being lengthened. Consequently, by moving the hydraulic device 62 into the first actuation state, a stiffness of the restoring apparatus 24, and the gradient of the restoring force characteristic curve of the restoring force acting on the inertial mass part 20, are reduced. To prevent a further variation of the restoring force characteristic curve while attaining the desired stiffness of the restoring apparatus 24, the hydraulic device 62 can again be moved by means of the control valve 80 into the locked state shown in Figure 2, wherein the actuation part 64 then remains in its rotational position assumed relative to the base part 18.

Figure 4 shows the hydraulic device 62 in a second actuation state which is similar to the first actuation state, but in the second actuation state, owing to the actuation part 64 being acted on with inertial force owing to rotational vibrations of the base part 18, hydraulic medium can be displaced out of the second chamber 74 but not out of the first chamber 72. Accordingly, the check valve 92 and the control valve 80 prevent a displacement of hydraulic medium out of the first chamber 72 via the line 76. By contrast, hydraulic medium can be displaced out of the second chamber 74 via the line 78, via the control valve 80, via the line 84, by opening the check valve 92, via the connecting line 88, and via the line 76, and introduced into the first chamber 72. Consequently, the actuation part 64 is rotated in the second direction of rotation 14 relative to the base part 18 about the axis of rotation 16 in stepped fashion under the action of inertia. The positive guide 66, which interacts with the articulation point 30 or with the protruding projection 34 which forms the articulation point 30, on the actuation part 64 has the effect here that the articulation point 30 or the protruding projection 34 which forms the articulation point 30 is displaced outward in the radial direction 8 along the displacement travel 32. In this way, the second lever section 42 is shortened while the first lever section 38 is lengthened. Consequently, the lever ratio l₁ / l₂ is increased, such that the stiffness of the restoring apparatus 24 or the gradient of the restoring force characteristic curve of the restoring force acting on the inertial mass part 20 is increased. When the desired stiffness of the restoring apparatus 24 is reached, the hydraulic device 62 can, by adjustment of the control valve 80, be transferred into the locked state again, wherein the stiffness of the restoring apparatus 24 or the rotational position of the actuation part 64 relative to the base part 18 is maintained owing to the locking action.

### LIST OF REFERENCE SIGNS

- 2: Rotary vibration absorber
- 4: Axial direction
- 6: Axial direction
- 8: Radial direction
- 10: Radial direction
- 12: First direction of rotation
- 14: Second direction of rotation
- 16: Axis of rotation
- 18: Base part
- 20: Inertial mass part
- 22: Outer side
- 24: Restoring apparatus
- 26: Spring device
- 28: Lever element
- 30: Articulation point
- 32: Displacement travel
- 34: Protruding projection
- 36: Guide
- 38: First lever section
- 40: Actuating force action point
- 42: Second lever section
- 44: Restoring force action point
- 46: Projection
- 48: Guide
- 50: First spring element
- 52: Second spring element
- 54: Projection
- 56: Longitudinal axis
- 58: Longitudinal axis
- 60: Adjustment apparatus
- 62: Hydraulic device
- 64: Actuation part
- 66: Positive guide
- 68: Cylinder
- 70: Piston
- 72: First chamber
- 74: Second chamber
- 76: Line
- 78: Line
- 80: Control valve
- 82: Line
- 84: Line
- 86: Connecting line
- 88: Connecting line
- 90: Check valve
- 92: Check valve

- l₁: Length of the first lever section
- l₂: Length of the second lever section
- r₁: Radial spacing
- r₂: Radial spacing

## Claims

1. A rotary vibration absorber (2) having a base part (18) which is rotatable about an axis of rotation (16), having an inertial mass part (20) which is arranged on the base part (18) and which is rotatable relative to the base part (18) counter to the restoring force of a restoring apparatus (24), and having an adjustment apparatus (60), the restoring apparatus (24) being adjustable with variation, by means of the adjustment apparatus (60), of a restoring force characteristic curve of the restoring force acting on the inertial mass part (20), **characterised in that** the adjustment apparatus (60) has an actuation part (64) which is arranged on the base part (18) and which, under the action of an inertial force acting on the actuation part (64), is rotatable relative to the base part (18) about the axis of rotation (16) with adjustment of the restoring apparatus (24).

2. The rotary vibration absorber (2) as claimed in claim 1, **wherein** the actuation part (64) can be locked so as to prevent a rotation of the actuation part (64) relative to the base part (18) about the axis of rotation (16).

3. The rotary vibration absorber (2) as claimed in claim 1, **wherein** the actuation part (64) can be fixed such that the actuation part (64) is rotatable relative to the base part (18) about the axis of rotation (16) in one direction of rotation (12; 14) and is not rotatable relative to the base part (18) about the axis of rotation (16) in an opposite direction of rotation (14; 12).

4. The rotary vibration absorber (2) as claimed in claim 1, **wherein** the actuation part (64) is rotatable relative to the base part (18) about the axis of rotation (16), with adjustment of the restoring apparatus (24), between two end positions, the actuation part (64) preferably being lockable in a position between the two end positions such that a rotation of the actuation part (64) relative to the base part (18) is prevented, and/or being fixable in a position between the end positions such that the actuation part (64) is rotatable relative to the base part (18) about the axis of rotation (16) in one direction of rotation (12; 14) and is not rotatable relative to the base part (18) about the axis of rotation (16) in an opposite direction of rotation (14; 12).

5. The rotary vibration absorber (2) as claimed in claim 2, **wherein** the actuation part (64) is hydraulically lockable and/or fixable, the adjustment apparatus (60) preferably having a hydraulic device (62) with a cylinder (68) and with a piston (70) which is guided in the cylinder (68), of which the piston (70) is arranged on the actuation part (64) or the base part (18) and the cylinder (68) is arranged on the base part (18) or the actuation part (64), and the cylinder (68) particular preferably being in the form of a double-acting cylinder (68).

6. The rotary vibration absorber (2) as claimed in claim 5, **wherein** the double-acting cylinder (68) has a first chamber (72) and a second chamber (74) and the hydraulic device (62) can be moved into a locked state, in which the inflow and outflow of hydraulic medium into and out of the first and second chambers (72, 74) is prevented, a first actuation state in which hydraulic medium can be displaced out of the first chamber (72) but not out of the second chamber (74) by the actuation part (64) which is subjected to inertial force, and/or a second actuation state in which hydraulic medium can be displaced out of the second chamber (74) but not out of the first chamber (72) by the actuation part (64) which is subjected to inertial force, it being the case in the first and/or second actuation state that hydraulic medium particularly preferably formed by the hydraulic medium displaced from the first and/or second chamber (72; 74) can be introduced into the second and/or first chamber (74; 72).

7. The rotary vibration absorber (2) as claimed in claim 1, **wherein** the restoring apparatus (24) has at least one pivotable lever element (28) by means of which an actuating force can be transmitted to the inertial mass part (20) so as to generate the restoring force acting on the inertial mass part (20), the lever element (28) preferably being pivotable about an articulation point (30) which interacts with the actuation part (64) such that, by rotation of the actuation part (64) relative to the base part (18) about the axis of rotation (16), said articulation point is adjustable and/or displaceable with variation of the lever ratio (l₁ / l₂) of the lever element (28).

8. The rotary vibration absorber (2) as claimed in claim 7, **wherein,** on the base part (18), there is provided a protruding projection (34), which is displaceable along a displacement travel (32) extending possibly in a radial direction (8, 10) and/or rectilinearly, for forming the articulation point (32), the actuation part (64) preferably having a positive guide (66) which extends obliquely with respect to the displacement travel (32), possibly rectilinearly, and which interacts with the protruding projection (34).

9. The rotary vibration absorber (2) as claimed in claim 7, **wherein** the inertial mass part (20) is rotatable relative to the base part (18) while maintaining a predetermined radial spacing (n) to the axis of rotation (16), and/or wherein the lever element (28) has a first lever section (38) between an actuating force action point (40) and the articulation point (30) and has a second lever section (42) between the articulation point (30) and a restoring force action point (44), the length (l₁, l₂) of which lever sections can be varied by rotation of the inertial mass part (20) relative to the base part (18), with the lever ratio (l₁ / l₂) being substantially maintained, it preferably being the case that two of the stated points (30, 40, 44), possibly the articulation point (30) on the one hand and the actuating force action point (40) or the restoring force action point (44) on the other hand, are displaceable relative to the lever element (28) with variation of the lengths (l₁, l₂) of the lever sections (38, 42), and the remaining point particularly preferably being arranged immovably on the lever element (28).

10. The rotary vibration absorber (2) as claimed in claim 7, **wherein** the restoring apparatus (24) has a spring device (26) for generating the actuating force, the spring device (26) preferably having a first spring element (50) and a second spring element (52) which act on the lever element (28) oppositely to one another and which are particularly preferably in the form of compression springs, possibly helical compression springs.

11. The rotary vibration absorber (2) as claimed in claim 10, **wherein** the lever element (28) is arranged in an initial state under preload of the first and second spring elements (50, 52), the first and second spring elements (50, 52) preferably being preloaded such that they both exert a respective actuating force on the lever element (28) over the maximum rotational angle range of the inertial mass part (20).

12. The rotary vibration absorber (2) as claimed in claim 10, **wherein** the first spring element (50) and the second spring element (52) each have a longitudinal axis (56, 58) which is offset radially outward in relation to the axis of rotation (16), the longitudinal axes (56, 58) preferably extending along a common straight line and/or parallel to a radial line and/or the spring elements (50, 52) particularly preferably being spaced apart from the axis of rotation (16) in a radial direction (8, 10).

13. The rotary vibration absorber (2) as claimed in claim 1, **wherein** the actuation part (64) and/or the inertial mass part (20) are/is of annular form, with the actuation part (64) preferably being in the form of an annular disk, and/or wherein the actuation part (64) and/or the lever element (28) are/is in the form of a substantially rigid actuation part (64) and/or lever element (28).

## Patentansprüche

1. Rotierender Schwingungsdämpfer (2) mit einem Basisteil (18), das um eine Drehachse (16) drehbar ist, mit einem Trägheitsmassenteil (20), das am Basisteil (18) angeordnet ist und das relativ zum Basisteil (18) entgegen der Rückstellkraft einer Rückstellvorrichtung (24) drehbar ist, und mit einer Einstellvorrichtung (60), wobei die Rückstellvorrichtung (24) unter Änderung, mittels der Einstellvorrichtung (60), einer Rückstellkraftkennlinie der auf das Trägheitsmassenteil (20) wirkenden Rückstellkraft einstellbar ist,
**dadurch gekennzeichnet, dass** die Einstellvorrichtung (60) ein Betätigungsteil (64) aufweist, das am Basisteil (18) angeordnet ist und das unter der Wirkung einer auf das Betätigungsteil (64) wirkenden Trägheitskraft relativ zum Basisteil (18) um die Drehachse (16) mit Einstellung der Rückstellvorrichtung (24) drehbar ist.

2. Rotierender Schwingungsdämpfer (2) nach Anspruch 1, wobei das Betätigungsteil (64) gesperrt werden kann, um eine Drehung des Betätigungsteils (64) relativ zum Basisteil (18) um die Drehachse (16) zu verhindern.

3. Rotierender Schwingungsdämpfer (2) nach Anspruch 1, wobei das Betätigungsteil (64) fixiert sein kann, so dass das Betätigungsteil (64) relativ zum Basisteil (18) um die Drehachse (16) in einer Drehrichtung (12; 14) drehbar ist und relativ zum Basisteil (18) um die Drehachse (16) in einer entgegengesetzten Drehrichtung (14; 12) nicht drehbar ist.

4. Rotierender Schwingungsdämpfer (2) nach Anspruch 1, wobei das Betätigungsteil (64) relativ zum Basisteil (18) um die Drehachse (16) mit Einstellung der Rückstellvorrichtung (24) zwischen zwei Endpositionen drehbar ist, wobei das Betätigungsteil (64) vorzugsweise in einer Position zwischen den beiden Endpositionen sperrbar ist, so dass eine Drehung des Betätigungsteils (64) relativ zum Basisteil (18) verhindert wird, und/oder in einer Position zwischen der Endpositionen fixierbar ist, so dass das Betätigungsteil (64) relativ zum Basisteil (18) um die Drehachse (16) in einer Drehrichtung (12; 14) drehbar ist und relativ zum Basisteil (18) um die Drehachse (16) in einer entgegengesetzten Drehrichtung (14; 12) nicht drehbar ist.

5. Rotierender Schwingungsdämpfer (2) nach Anspruch 2, wobei das Betätigungsteil (64) hydraulisch sperrbar und/oder fixierbar ist, wobei die Einstellvorrichtung (60) vorzugsweise eine hydraulische Vorrichtung (62) mit einem Zylinder (68) und mit einem im Zylinder (68) geführten Kolben (70) aufweist, wobei der Kolben (70) am Betätigungsteil (64) oder am Basisteil (18) angeordnet ist und der Zylinder (68) am Basisteil (18) oder am Betätigungsteil (64) angeordnet ist, und wobei der Zylinder (68) besonders vorzugsweise die Form eines doppelt wirkenden Zylinders (68) aufweist.

6. Rotierender Schwingungsdämpfer (2) nach Anspruch 5, wobei der doppelt wirkende Zylinder (68) eine erste Kammer (72) und eine zweite Kammer (74) aufweist und die hydraulische Vorrichtung (62) bewegbar ist in einen Sperrzustand, in dem das Einströmen und Ausströmen von Hydraulikmedium in die bzw. aus der erste(n) und zweite(n) Kammer (72, 74) verhindert wird, in einen ersten Betätigungszustand, in dem Hydraulikmedium durch das Betätigungsteil (64), das einer Trägheitskraft ausgesetzt ist, aus der ersten Kammer (72), jedoch nicht aus der zweiten Kammer (74) befördert werden kann, und/oder in einen zweiten Betätigungszustand, in dem Hydraulikmedium durch das Betätigungsteil (64), das einer Trägheitskraft ausgesetzt ist, aus der zweiten Kammer (74), jedoch nicht aus der ersten Kammer (72) befördert werden kann, wobei Hydraulikmedium, das besonders vorzugsweise durch das aus der ersten und/oder der zweiten Kammer (72; 74) beförderte Hydraulikmedium ausgebildet ist, in die zweite und/oder erste Kammer (74; 72) eingeführt werden kann.

7. Rotierender Schwingungsdämpfer (2) nach Anspruch 1, wobei die Rückstellvorrichtung (24) zumindest ein schwenkbares Hebelelement (28) aufweist, mit dessen Hilfe eine Betätigungskraft auf das Trägheitsmassenteil (20) übertragen werden kann, um die auf das Trägheitsmassenteil (20) wirkende Rückstellkraft zu erzeugen, wobei das Hebelelement (28) vorzugsweise um einen Gelenkpunkt (30), der mit dem Betätigungsteil (64) zusammenwirkt, durch Drehung des Betätigungsteils (64) relativ zum Basisteil (18) um die Drehachse (16) schwenkbar ist, wobei der Gelenkpunkt unter Änderung des Hebelverhältnisses (l₁/l₂) des Hebelelements (28) einstellbar und/oder verschiebbar ist.

8. Rotierender Schwingungsdämpfer (2) nach Anspruch 7, wobei am Basisteil (18) ein vorstehender Vorsprung (34) bereitgestellt ist, der entlang eines Verschiebewegs (32) verschiebbar ist, der sich gegebenenfalls in einer radialen Richtung (8, 10) und/oder geradlinig erstreckt, zum Ausbilden des Gelenkpunkts (32), wobei das Betätigungsteil (64) vorzugsweise eine Zwangsführung (66) aufweist, die sich schräg in Bezug auf den Verschiebeweg (32), gegebenenfalls geradlinig, erstreckt und die mit dem vorstehenden Vorsprung (34) zusammenwirkt.

9. Rotierender Schwingungsdämpfer (2) nach Anspruch 7, wobei das Trägheitsmassenteil (20) relativ zum Basisteil (18) drehbar ist, während es einen vorbestimmten radialen Abstand (r₁) zur Drehachse (16) beibehält und/öder wobei das Hebelelement (28) einen ersten Hebelabschnitt (38) zwischen einem Betätigungskraftwirkungspunkt (40) und dem Gelenkpunkt (30) aufweist und einen zweiten Hebelabschnitt (42) zwischen dem Gelenkpunkt (30) und einem Rückstellkraftwirkungspunkt (44) aufweist, wobei die Länge (l₁, l₂) der Hebelabschnitte durch Drehung des Trägheitsmassenteils (20) relativ zum Basisteil (18) verändert werden kann, wobei das Hebelverhältnis (l₁/l₂) im Wesentlichen beibehalten wird, wobei vorzugsweise zwei der genannten Punkte (30, 40, 44), gegebenenfalls der Gelenkpunkt (30) auf der einen Seite und der Betätigungskraftwirkungspunkt (40) oder der Rückstellkraftwirkungspunkt (44) auf der anderen Seite, relativ zum Hebelelement (28) unter Änderung der Längen (l₁, l₂) der Hebelabschnitte (38, 42) verschiebbar sind und wobei der verbleibende Punkt besonders vorzugsweise unverschiebbar am Hebelelement (28) angeordnet ist.

10. Rotierender Schwingungsdämpfer (2) nach Anspruch 7, wobei die Rückstellvorrichtung (24) eine Federvorrichtung (26) zum Erzeugen der Betätigungskraft aufweist, wobei die Federvorrichtung (26) vorzugsweise ein erstes Federelement (50) und ein zweites Federelement (52) aufweist, die am Hebelelement (28) gegeneinander wirken und die besonders vorzugsweise die Form von Druckfedern, gegebenenfalls Schraubendruckfedern, aufweisen.

11. Rotierender Schwingungsdämpfer (2) nach Anspruch 10, wobei das Hebelelement (28) in einem Ausgangszustand unter Vorspannung des ersten und zweiten Federelements (50, 52) angeordnet ist, wobei das erste und zweite Federelement (50, 52) vorzugsweise vorgespannt werden, so dass sie beide eine jeweilige Betätigungskraft auf das Hebelelement (28) über den maximalen Drehwinkelbereich des Trägheitsmassenteils (20) ausüben.

12. Rotierender Schwingungsdämpfer (2) nach Anspruch 10, wobei das erste Federelement (50) und das zweite Federelement (52) jedes eine Längsachse (56, 58) aufweisen, die in Bezug auf die Drehachse (16) radial nach außen versetzt ist, wobei sich die Längsachsen (56, 58) vorzugsweise entlang einer gemeinsamen Geraden und/oder parallel zu einer radialen Linie erstreckt und/oder wobei die Federelemente (50, 52) besonders vorzugsweise in einer radialen Richtung (8, 10) von der Drehachse (16) beabstandet sind.

13. Rotierender Schwingungsdämpfer (2) nach Anspruch 1, wobei das Betätigungsteil (64) und/oder das Trägheitsmassenteil (20) eine ringförmige Form aufweist/- en, wobei das Betätigungsteil (64) vorzugsweise die Form einer ringförmigen Scheibe aufweist und/oder wobei das Betätigungsteil (64) und/oder das Hebelelement (28) die Form eines im Wesentlichen starren Betätigungsteils (64) und/oder Hebelelements (28) aufweist/-en.

## Revendications

1. Amortisseur de vibrations rotatif (2) ayant une partie base (18) qui peut tourner autour d'un axe de rotation (16), ayant une partie masse d'inertie (20) qui est disposée sur la partie base (18) et qui peut tourner par rapport à la partie base (18) contre la force de rappel d'un appareil de rappel (24), et ayant un appareil de réglage (60), l'appareil de rappel (24) étant réglable avec la variation, au moyen de l'appareil de réglage (60), d'une courbe caractéristique de force de rappel de la force de rappel agissant sur la partie masse d'inertie (20),
**caractérisé en ce que** l'appareil de réglage (60) a une partie d'actionnement (64) qui est disposée sur la partie base (18) et qui, sous l'action d'une force d'inertie agissant sur la partie d'actionnement (64), peut tourner par rapport à la partie base (18) autour de l'axe de rotation (16) avec réglage de l'appareil de rappel (24).

2. Amortisseur de vibrations rotatif (2) selon la revendication 1, la partie d'actionnement (64) pouvant être verrouillée de sorte à empêcher une rotation de la partie d'actionnement (64) par rapport à la partie base (18) autour de l'axe de rotation (16).

3. Amortisseur de vibrations rotatif (2) selon la revendication 1, la partie d'actionnement (64) pouvant être fixée de sorte que la partie d'actionnement (64) puisse tourner par rapport à la partie base (18) autour de l'axe de rotation (16) dans un sens de rotation (12 ; 14) et ne puisse tourner par rapport à la partie base (18) autour de l'axe de rotation (16) dans le sens de rotation opposé (14 ; 12).

4. Amortisseur de vibrations rotatif (2) selon la revendication 1, la partie d'actionnement (64) pouvant tourner par rapport à la partie base (18) autour de l'axe de rotation (16), avec le réglage de l'appareil de rappel (24), entre deux positions d'extrémité, la partie d'actionnement (64) pouvant de préférence être verrouillée dans une position entre les deux positions d'extrémité de sorte qu'une rotation de la partie d'actionnement (64) par rapport à la partie base (18) soit empêchée, et/ou pouvant être fixée dans une position entre les positions d'extrémité de sorte que la partie d'actionnement (64) puisse tourner par rapport à la partie base (18) autour de l'axe de rotation (16) dans un sens de rotation (12 ; 14) et ne puisse pas tourner par rapport à la partie base (18) autour de l'axe de rotation (16) dans un sens de rotation opposé (14 ; 12).

5. Amortisseur de vibrations rotatif (2) selon la revendication 2, la partie d'actionnement (64) pouvant être verrouillée et/ou fixée hydrauliquement, l'appareil de réglage (60) ayant de préférence un dispositif hydraulique (62) avec un vérin (68) et avec un piston (70) qui est guidé dans le vérin (68), le piston (70) étant disposé sur la partie d'actionnement (64) ou la partie base (18) et le vérin (68) étant disposé sur la partie base (18) ou la partie d'actionnement (64), et le vérin (68) étant particulièrement de préférence sous la forme d'un vérin à double effet (68).

6. Amortisseur de vibrations rotatif (2) selon la revendication 5, **caractérisé en ce que** le vérin à double effet (68) a une première chambre (72) et une seconde chambre (74) et le dispositif hydraulique (62) peut être déplacé dans un état verrouillé, dans lequel l'entrée et la sortie du fluide hydraulique dans et hors des première et seconde chambres (72, 74) sont empêchées, un premier état d'actionnement dans lequel le fluide hydraulique peut être déplacé hors de la première chambre (72) mais pas hors de la seconde chambre (74) par la partie d'actionnement (64) qui est soumis à la force inertielle, et/ou un second état d'actionnement dans lequel le fluide hydraulique peut être déplacé hors de la seconde chambre (74) mais pas hors de la première chambre (72) par la partie d'actionnement (64) qui est soumise à une force d'inertie, dans le premier et/ou le second état d'actionnement, le fluide hydraulique formé particulièrement de préférence par le fluide hydraulique déplacé à partir de la première et/ou seconde chambre (72 ; 74) pouvant être introduit dans la seconde et/ou première chambre (74 ; 72).

7. Amortisseur de vibrations rotatif (2) selon la revendication 1, **caractérisé en ce que** l'appareil de rappel (24) a au moins un élément levier pivotant (28) au moyen duquel une force d'actionnement peut être transmise à la partie masse d'inertie (20) de sorte à générer la force de rappel agissant sur la partie masse d'inertie (20), l'élément levier (28) pouvant de préférence pivoter autour d'un point d'articulation (30) qui interagit avec la partie d'actionnement (64) de sorte que, par rotation de la partie d'actionnement (64) par rapport à la partie base (18) autour de l'axe de rotation (16), ledit point d'articulation puisse être réglé et/ou déplacé avec la variation du rapport de levier (l₁/l₂) de l'élément levier (28).

8. Amortisseur de vibrations rotatif (2) selon la revendication 7, sur la partie base (18) se trouvant une saillie proéminente (34) qui peut être déplacée le long d'une course de déplacement (32) s'étendant éventuellement dans une direction radiale (8, 10) et/ou rectiligne, pour former le point d'articulation (32), la partie d'actionnement (64) ayant de préférence un guide positif (66) qui s'étend obliquement par rapport à la course de déplacement (32), éventuellement de façon rectiligne, et qui interagit avec la saillie proéminente (34) .

9. Amortisseur de vibrations rotatif (2) selon la revendication 7, la partie masse d'inertie (20) pouvant tourner par rapport à la partie base (18) tout en maintenant un espacement radial prédéfini (r₁) de l'axe de rotation (16), et/ou l'élément levier (28) ayant une première section de levier (38) entre un point d'action de force d'actionnement (40) et le point d'articulation (30) et ayant une seconde section de levier (42) entre le point d'articulation (30) et un point d'action de force de rappel (44), la longueur (l₁, l₂) desdites sections de levier pouvant varier par rotation de la partie masse d'inertie (20) par rapport à la partie base (18), le rapport de levier (l₁/l₂) étant sensiblement maintenu, de préférence deux des points indiqués (30, 40, 44), éventuellement le point d'articulation (30) d'une part et le point d'action de force d'actionnement (40) ou le point d'action de force de rappel (44) d'autre part, pouvant être déplacés par rapport à l'élément levier (28) avec variation des longueurs (l₁, l₂) des sections de levier (38, 42), et le point restant étant disposé particulièrement de préférence de façon fixe sur l'élément levier (28).

10. Amortisseur de vibrations rotatif (2) selon la revendication 7, l'appareil de rappel (24) ayant un dispositif à ressort (26) pour générer la force d'actionnement, le dispositif à ressort (26) ayant de préférence un premier élément ressort (50) et un second élément ressort (52) qui agissent sur l'élément levier (28) de façon opposée l'un à l'autre et qui sont particulièrement de préférence sous la forme de ressorts de compression, éventuellement de ressorts de compression en spirale.

11. Amortisseur de vibrations rotatif (2) selon la revendication 10, l'élément levier (28) étant disposé dans un état initial sous précontrainte des premier et second éléments ressorts (50, 52), les premier et second éléments ressorts (50, 52) étant de préférence précontraints de sorte à exercer chacun une force d'actionnement respective sur l'élément levier (28) sur la plage d'angle rotatif maximal de la partie masse d'inertie (20).

12. Amortisseur de vibrations rotatif (2) selon la revendication 10, le premier élément ressort (50) et le second élément ressort (52) ayant chacun un axe longitudinal (56, 58) qui est décalé radialement vers l'extérieur par rapport à l'axe de rotation (16), les axes longitudinaux (56, 58) s'étendant de préférence le long d'une ligne droite commune et/ou parallèles à une ligne radiale et/ou les éléments ressorts (50, 52) étant espacés particulièrement de préférence de l'axe de rotation (16) dans une direction radiale (8, 10).

13. Amortisseur de vibrations rotatif (2) selon la revendication 1, la partie d'actionnement (64) et/ou la partie masse d'inertie (20) étant de forme annulaire, la partie d'actionnement (64) étant de préférence sous la forme d'un disque annulaire, et/ou la partie d'actionnement (64) et/ou l'élément levier (28) étant sous la forme d'une partie d'actionnement (64) et/ou d'un élément levier (28) sensiblement rigide.
